# DEMANDE DE BREVET EUROPEEN

(11) **EP 1 947 785 A1**
(43) Date de publication de la demande: **23.07.2008**
(21) Numéro de dépôt: 08155069.1
(22) Date de dépôt: 06.09.2006
(51) Int. Cl.: H04B 10/00

(54) **Dispositif de conversion d'énergie et son application à la télécommande de composants optiques actifs déportés dans un réseau de télécommunication optique**

(30) Priorité: 06.09.2005 FR 0552694
(62) Demande divisionnaire de: 06808287.4
(71) Demandeur: France Télécom, 75015 Paris (FR)
(72) Inventeur: Ramanitra, Hary France Telecom, 59300, Valenciennes (FR); Chanclou, Philippe France Telecom, 22300, Lannion (FR); Etrillard, Jackie France Telecom, 22300, Locquemeau (FR)

(57) **Abrégé**

L'invention concerne un module de conversion d'une énergie lumineuse en une énergie électrique (MC1) destiné à être utilisé dans un réseau optique, assurant la conversion d'une énergie lumineuse provenant d'un signal optique transporté dans une fibre optique (FTa₁) depuis une source d'énergie lumineuse (OS1), en une énergie électrique.

L'invention concerne également l'utilisation de ce module dans des dispositifs de téléalimentation et/ou de télécommande pour réseaux optiques.

L'invention concerne enfin des systèmes de téléalimentation et/ou télécommande utilisant des tels dispositifs.

## Description

La présente invention concerne de manière générale un dispositif de conversion d'une énergie lumineuse en une énergie électrique et son application à la téléalimentation et/ou la télécommande de composants optiques actifs déportés dans un réseau de télécommunication optique.

A l'heure actuelle, les réseaux de télécommunication sont partagés en trois parties : le réseau coeur, le réseau métropolitain et le réseau d'accès. Les développements récents portent à croire que la fibre optique deviendra un support de transmission privilégié du réseau d'accès tout comme elle l'est déjà pour les réseaux coeur et métropolitain. La fibre optique étant un support de transport prépondérant des réseaux de télécommunication, de nombreuses fonctions optiques telles que la répartition ou la commutation par exemple jalonnent lesdits réseaux et la question de l'alimentation électrique des composants optiques réalisant ces fonctions est au centre de nombreuses réflexions. De tels composants optiques, dits composants optiques actifs, comportent au moins une entrée optique et au moins une sortie optique distinctes l'une de l'autre et assurent, entre cette entrée optique et cette sortie optique, une fonction optique. L'extension de la fibre optique au réseau d'accès ne fera que renforcer cet état de fait.

Il existe actuellement deux réponses à ces problèmes d'alimentation électrique dans les réseaux optiques : l'alimentation locale et la téléalimentation.

L'alimentation locale consiste à placer une source d'énergie électrique à proximité du ou des composants optique actifs à alimenter. Le plus souvent, la source d'énergie consiste en un raccord à un réseau de distribution d'électricité. Pour cela, les divers équipements, tels que le transformateur, le redresseur ou le convertisseur continu-continu et la batterie de secours sont stockés dans une armoire disposée sur les trottoirs.

Dans des endroits où les conditions d'exploitation sont favorables, l'énergie est fournie par une source autonome du type photovoltaïque. Cette source d'énergie est constituée d'une pluralité de cellules photovoltaïques associées à un régulateur et à une batterie de stockage. Le bon fonctionnement d'une telle source d'énergie est fonction des conditions climatiques ce qui limite son champ géographique d'utilisation.

L'alimentation locale des composants optiques actifs du réseau présente un certain nombre d'inconvénients notamment en termes de coût et de complexité des câblages. Cette complexité de câblage entraîne un manque de fiabilité tandis que la dépendance au réseau de distribution électrique engendre un manque de flexibilité dans le choix de la localisation des composants optiques au sein du réseau de télécommunications. Bien que la solution qui consiste à utiliser une source autonome offre une plus grande liberté quant à la répartition des composants optiques actifs dans le réseau, celle-ci présente des inconvénients tels qu'une forte dépendance aux conditions climatiques et un coût de maintenance élevé.

Afin de palier aux inconvénients de l'alimentation locale, il a été proposé la téléalimentation par paire de cuivre.

Cette solution consiste à faire transiter l'énergie électrique nécessaire au fonctionnement des composants optiques actifs via une paire de cuivre depuis une source d'énergie déportée. La source d'énergie peut être située dans un central téléphonique, en entrée de zone de distribution optique, ou encore à partir de chez l'abonné. Selon la localisation de la source d'énergie, celle-ci peut être doublée par un groupe électrogène servant de source de secours.

Cependant, cette technique d'alimentation présente plusieurs inconvénients. Un premier inconvénient tient à l'influence de paramètres tels que l'environnement électromagnétique ou encore le taux d'humidité du milieu dans lequel les câbles circulent. Pour cela, il est nécessaire de les protéger contre les ondes électromagnétiques, les hausses et baisses de tension et contre les courts-circuits entre paires. Or, cette protection a un coût significatif.

Un second inconvénient réside dans la présence nécessaire de convertisseurs de tension et de cartes électroniques de commandes à proximité des composants optiques actifs à alimenter, ces équipements étant consommateurs d'énergie. En effet, la tension électrique délivrée par un réseau de distribution d'électricité étant de 48 V, elle doit être réduite afin de pouvoir alimenter un composant optique actif sans l'endommager du fait d'une tension électrique inadaptée.

Enfin, un troisième inconvénient tient à l'architecture même du réseau d'accès optique. La téléalimentation repose sur le principe que la paire de cuivre transportant l'énergie suit la fibre optique transportant les données. Dans le réseau d'accès il n'est pas envisageable d'associer une fibre optique à une paire de cuivre car celui-ci est trop dense.

La présente invention a donc pour but de proposer une solution pour l'alimentation électrique des composants optiques actifs jalonnant un réseau optique qui ne présente pas les inconvénients de l'art antérieur.

A cette fin, l'invention propose un dispositif de téléalimentation d'au moins un composant optique actif caractérisé en ce qu'il comporte au moins un module de conversion d'énergie passif, ledit module de conversion d'énergie assurant la conversion d'une énergie lumineuse en énergie électrique destinée à l'alimentation dudit composant optique actif.

Le dispositif d'alimentation en énergie des divers composants optiques actifs du réseau utilise les fibres optiques déjà présentes dans le réseau, ou une fibre dédiée comme support de transport, pour tirer l'énergie nécessaire au fonctionnement des composants optiques actifs jalonnant ledit réseau de la conversion de l'énergie lumineuse ainsi véhiculée en énergie électrique. Le réseau est simplifié en supprimant la paire de cuivre servant au transport de l'énergie électrique.

Dans un mode de réalisation particulier de l'invention, le module de conversion d'énergie comporte au moins un composant photovoltaïque.

Selon un mode de réalisation, ledit dispositif comporte un circuit amplificateur passif d'au moins une grandeur électrique permettant d'amplifier la puissance électrique délivrée en sortie du module de conversion d'énergie.

Ce mode de réalisation permet d'alimenter à distance des composants optiques actifs consommateurs d'énergie sans avoir à faire appel à un nombre important de composants photovoltaïques constituant le module de conversion d'énergie.

L'invention concerne également un dispositif de télécommande d'au moins un composant optique actif caractérisé en ce que il comporte des moyens d'alimentation locaux reliés audit composant optique actif, un module de conversion d'énergie passif et au moins un dispositif interrupteur destiné à être commandé par ledit module de conversion d'énergie.

Dans un mode de réalisation de l'invention, le module de conversion d'énergie comporte au moins un composant photovoltaïque.

Un réseau de télécommunication équipé de tels dispositifs de télécommande, dont le prix d'achat est faible voit sa consommation en énergie électrique diminuer de manière significative. En effet, la technique de télécommande utilisant un réseau de distribution électrique fonctionne au moyen d'éléments actifs forts consommateurs d'énergie.

Dans un autre mode de réalisation, le dispositif interrupteur est avantageusement constitué d'un phototransistor.

Ce mode de réalisation permet de simplifier le réseau de télécommunication optique, de diminuer son coût et de réduire la puissance optique nécessaire au fonctionnement dudit réseau.

L'invention concerne encore un réseau optique de télécommunication comportant au moins une source optique, au moins un composant optique actif à téléalimenter, et au moins une fibre optique permettant de transporter l'énergie lumineuse issue de la source optique jusqu'audit composant optique actif, caractérisé en ce qu'il comporte au moins un module de conversion d'énergie comportant au moins un composant photovoltaïque, ledit module de conversion d'énergie assurant la conversion d'une énergie lumineuse en énergie électrique, ladite énergie électrique étant utilisée pour alimenter ledit composant optique actif.

Dans un tel réseau, l'énergie est véhiculée dans un support diélectrique, la fibre optique, insensible aux environnements électromagnétiques. L'invention s'applique donc de façon particulièrement avantageuse dans des domaines où les contraintes liées à de forts champs magnétiques posent des problèmes d'alimentation en énergie électrique de certains composants optiques actifs.

L'énergie lumineuse peut être véhiculée via une fibre optique transportant des données ou une fibre dédiée à la téléalimentation.

Le mode de réalisation faisant appel à une fibre optique des données est avantageux car il permet d'utiliser un support existant ce qui permet une économie significative.

L'invention concerne aussi un réseau optique comportant au moins une source optique de télécommunication, au moins un composant optique actif à télécommander, et au moins une fibre optique permettant de transporter l'énergie lumineuse issue de la source optique jusqu'audit composant optique actif, caractérisé en ce qu'il comporte au moins un module de conversion d'énergie comportant au moins un composant photovoltaïque, ledit module de conversion d'énergie assurant la conversion d'une énergie lumineuse en énergie électrique, ladite énergie électrique étant utilisée pour commander ledit composant optique actif.

D'autres caractéristiques et avantages apparaîtront à la lecture de modes de réalisation préférés décrits en référence aux dessins dans lesquels :
- la figure 1 représente un réseau de télécommunications selon l'invention fonctionnant sur le principe d'une fibre optique dédiée éclairant un module de conversion d'énergie destiné à alimenter en énergie électrique un composant optique actif,
- la figure 2 représente un réseau de télécommunications selon l'invention fonctionnant sur le principe d'une fibre optique dédiée éclairant un module de conversion d'énergie composé de N composants photovoltaïques,
- la figure 3A représente un réseau de télécommunications selon l'invention dans lequel le module de conversion d'énergie est constitué d'un composant photovoltaïque connecté à un circuit amplificateur de puissance électrique passif,
- la figure 3B représente un réseau de télécommunications selon l'invention dans lequel le module de conversion d'énergie est constitué de deux composants photovoltaïques connectés à un circuit amplificateur de puissance électrique actif,
- la figure 4 représente un réseau de télécommunications selon l'invention utilisant comme support une fibre optique de données dans laquelle au moins un canal optique est alloué à l'éclairage d'un module de conversion d'énergie,
- la figure 5 représente un réseau de télécommunications selon l'invention utilisant comme support une fibre optique de données dans lequel le module de conversion d'énergie est constitué d'une pluralité de composants photovoltaïques,
- la figure 6A représente un réseau de télécommunications selon l'invention utilisant comme support une fibre optique de données dans lequel le module de conversion d'énergie est constitué d'un composant photovoltaïque connecté à un circuit amplificateur de puissance électrique passif,
- la figure 6B représente un réseau de télécommunications selon l'invention utilisant comme support une fibre optique de données dans lequel le module de conversion d'énergie est constitué de deux composants photovoltaïques connectés à un circuit amplificateur de puissance électrique actif,
- la figure 7 représente un réseau de télécommunications selon l'invention utilisant comme support une fibre optique de données dans laquelle au moins un canal optique est alloué à l'éclairage d'un module de conversion d'énergie destiné à commander un composant optique actif.
Sur chacune des figures, les traits en pointillés représentent les circuits électriques et les traits pleins, les circuits optiques.

Les réseaux optiques sont dotés de fonctions optiques assurant leur fonctionnement. Ces fonctions optiques, sont réalisées par des composants optiques actifs à très faible consommation électrique, de l'ordre de quelques dizaines de milliwatts. C'est l'une des raisons pour lesquelles les réseaux optiques se prêtent bien à la téléalimentation. De tels composants optiques actifs sont par exemple des coupleurs optiques variables.

Selon l'invention, l'énergie lumineuse véhiculée par des fibres optiques présentes dans le réseau de télécommunication est convertie en énergie électrique. Cette conversion est réalisée au moyen d'un module de conversion d'énergie présentant la particularité d'être passif, c'est-à-dire ne nécessitant pas d'alimentation en électricité pour fonctionner.

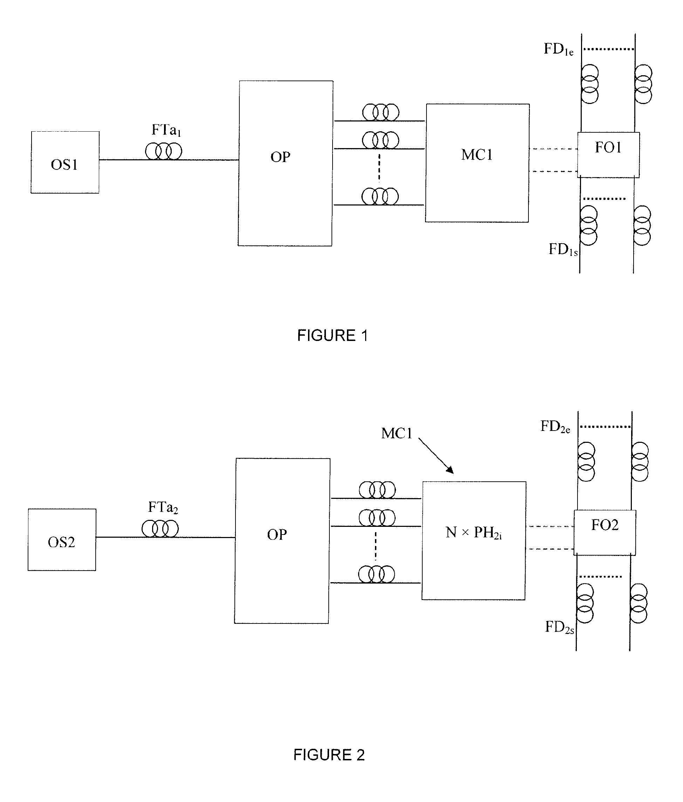

La figure 1 illustre de manière générale un réseau de télécommunications au sein duquel l'invention est mise en oeuvre. Dans ce réseau, un flux lumineux destiné à l'alimentation électrique d'un composant optique actif F01 est transporté dans au moins une fibre optique dédiée FTa₁. Autrement dit, la fibre optique FTa₁ ne véhicule que le flux optique destiné à l'alimentation électrique du composant optique actif F01 et aucun flux de données. A proximité du composant optique actif F01 à alimenter, par exemple dans le même boîtier de stockage, la fibre dédiée FTa₁ est reliée à un composant optique passif OP « une entrée vers N sorties » où N correspond au nombre d'entrées d'un module de conversion d'énergie MC1 à éclairer. Le nombre d'entrées du module de conversion MC1 à éclairer dépend des besoins énergétiques du composant optique actif F01 à alimenter. Ainsi, selon la consommation électrique du composant optique actif F01, le nombre N d'entrées du module de conversion MC1 varie.

Dans ce réseau, le dispositif « une entrée vers N sorties » OP est, par exemple, un coupleur optique passif « 1 vers N » ou un démultiplexeur en longueurs d'onde. Dans le cas où le dispositif « 1 vers N » est un coupleur optique, chaque entrée du module de conversion MC1 est connecté à sa propre fibre optique et est éclairé par la même longueur d'onde. Dans le cas où le dispositif 1 vers N est un démultiplexeur, chaque entrée du module de conversion MC1 est éclairée par une longueur d'onde qui lui est propre.

Enfin, le module de conversion d'énergie MC1 est connecté électriquement avec le composant optique actif F01 à alimenter.

Le composant optique actif F01 est connecté à au moins une fibre optique FD₁ₑ assurant l'acheminement des flux de données entrant vers ledit composant optique F01, et à au moins une fibre optique sortante FD₁ₛ assurant la répartition des flux de données sortant en fonction de leur destination dans le réseau. Le nombre de fibres optiques entrantes FD₁ₑ et le nombre de fibres optiques sortantes FD₁ₛ connectées au composant optique actif F01 dépendent du type de fonction réalisée par celui-ci. Par exemple, si le composant optique actif F01 est un coupleur optique variable« 1 vers 2 », celui-ci est connecté à une fibre optique entrante et deux fibres optiques sortantes.

Le dispositif de conversion d'énergie MC1 est éclairé par une source optique OS1 au moyen de la fibre optique dédiée FTa₁. La source optique OS1 est constituée par exemple d'un laser, d'un amplificateur, ou d'un laser et d'un amplificateur. Cette source optique OS1 est située par exemple au niveau du central téléphonique mais pourrait également se trouver dans une station d'énergie intermédiaire.

Dans un réseau d'accès, les flux de données transitent sur de courtes distances. Ainsi, la puissance optique nécessaire à l'acheminement des flux données est faible. Une telle puissance optique n'est pas suffisante pour téléalimenter un composant optique actif, c'est pourquoi lorsque l'invention est appliquée à la téléalimentation de composants optiques actifs situés dans un réseau d'accès, comme c'est le cas des différents modes de réalisation particuliers de l'invention représentés sur les figures 2 à 3B, les flux lumineux destinés à éclairer le module de conversion MC1 sont véhiculés par une fibre optique dédiée dans laquelle une puissance optique adaptée est envoyée.

Ainsi la source optique OS1 est, le plus souvent uniquement dédiée à la téléalimentation. Il est alors nécessaire de prévoir une seconde source optique (non représentée sur les figures) assurant l'envoi des données dans le réseau. Néanmoins, dans certains cas de figures, une seule source optique sert à la fois à la téléalimentation et à l'envoi de flux de données dans le réseau.

La figure 2 représente un premier mode de réalisation particulier de l'invention. Ici, le module de conversion d'énergie MC1 est constitué d'une pluralité de composants photovoltaïques PH₂ᵢ passifs montés en série ou en parallèle afin d'amplifier respectivement la valeur de la tension ou la valeur du courant délivré. Le nombre de modules photovoltaïques PH2ᵢ à éclairer dépend des besoins énergétiques du composant optique actif F02 à alimenter auxquels ils sont connectés électriquement. Un tel composant photovoltaïque est par exemple une photodiode.

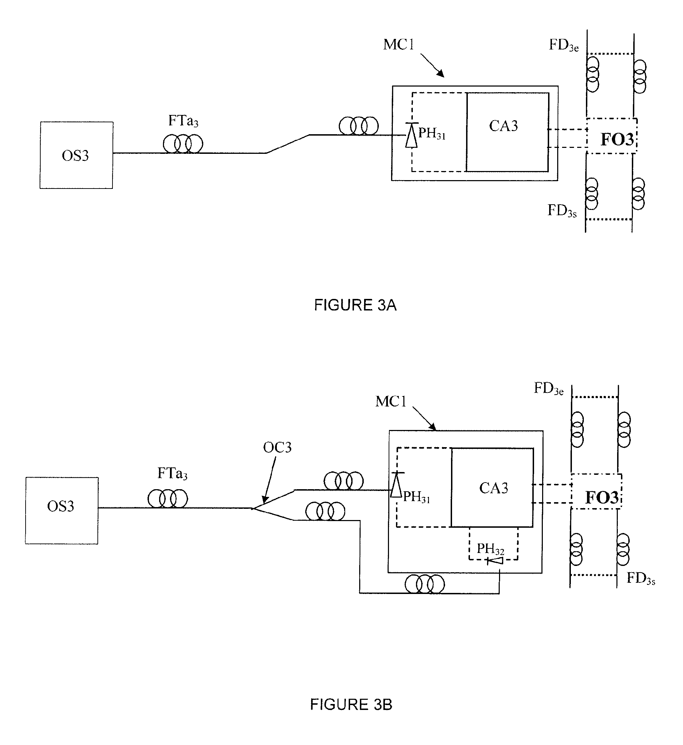

Selon un deuxième mode de réalisation particulier de l'invention représenté à la figure 3A, le dispositif d'alimentation d'un composant optique actif F03 est constitué d'un seul composant photovoltaïque PH₃₁ connecté à une fibre optique dédiée FTa₃. Dans ce système, la puissance optique transportée par la fibre dédiée FTa₃ est injectée dans le composant photovoltaïque PH₃₁ lequel est connecté à un circuit amplificateur CA3 permettant d'amplifier la puissance électrique délivrée par ledit composant photovoltaïque PH₃₁, le circuit amplificateur CA3 étant, de préférence, un circuit passif. Enfin, le circuit d'amplification CA3 est relié au composant optique actif F03 à alimenter afin de lui délivrer la puissance électrique amplifiée, ledit composant optique passif est également connecté à au moins une fibre optique entrante FD₃ₑ, et au moins une fibre optique sortante FD₃ₛ.

Le mode de réalisation représenté à la figure 3B constitue une variante du mode de réalisation représenté à la figure 3A. Il diffère de celui-ci en ce que le circuit amplificateur CA3 est un circuit actif, c'est-à-dire qu'il nécessite un apport, même très faible, en énergie électrique pour pouvoir fonctionner. Il est alors nécessaire d'introduire un deuxième composant photovoltaïque PH₃₂ dans le dispositif d'alimentation en énergie électrique. Le rôle de ce second composant photovoltaïque PH₃₂ est de fournir l'énergie nécessaire au fonctionnement du circuit amplificateur CA3. Pour cela, un coupleur optique OC3 « un vers deux » permettant de répartir le flux issu de la source optique OS3 sur les deux composants photovoltaïques PH₃₁ et PH₃₂ est disposé à l'extrémité de fibre FTa₃.

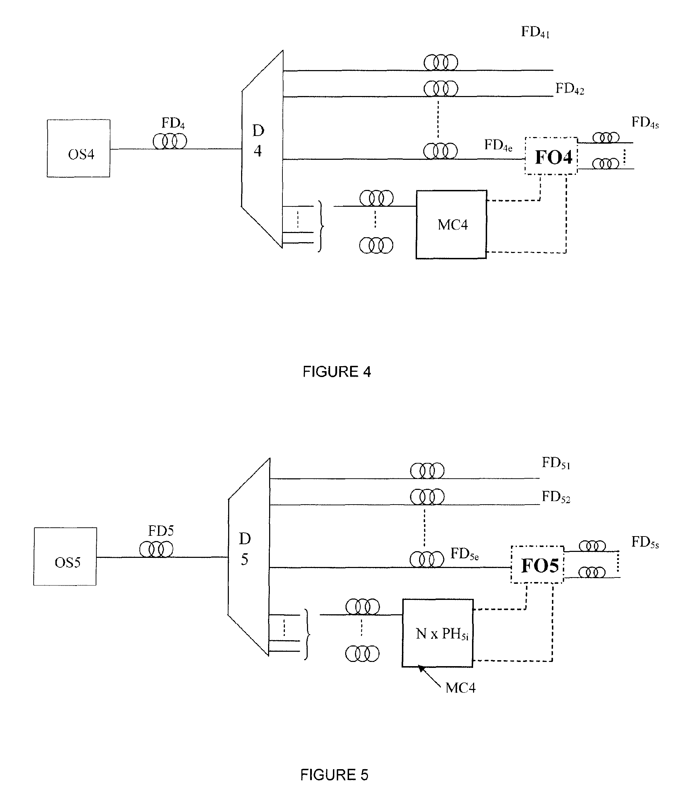

Les figures 4, 5, 6A et 6B illustrent quatre autres réseaux dans lesquels le flux lumineux destiné à l'alimentation électrique des composants optiques actifs est transporté dans la même fibre optique que celle qui transporte des flux données. Ces systèmes sont destinés, de préférence, à la téléalimentation dans les réseaux longues distances, comme par exemple le réseau coeur, où les données sont transportées à travers une forte puissance optique.

Ces systèmes ont plus économiques car ils utilisent des supports déjà existant dans le réseau pour acheminer l'énergie lumineuse vers les composants optiques passifs à alimenter.

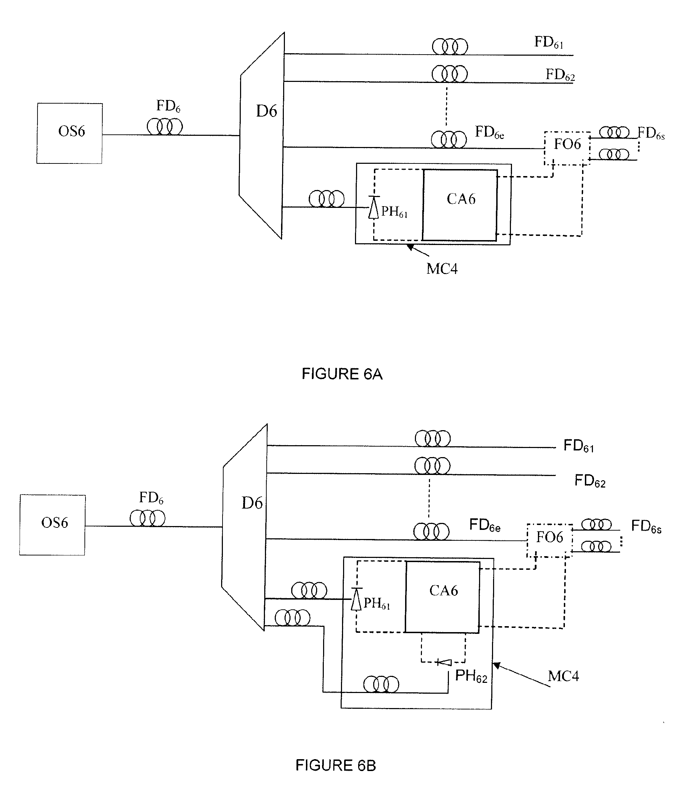

Les flux lumineux destinés à la téléalimentation des composants optiques actifs transitant par la même fibre optique que les flux de données, les réseaux représentés de manière générale à la figure 4 et de façon plus particulière aux figures 5, 6A et 6B utilisent comme dispositif « 1 vers N » un démultiplexeur en longueurs d'onde Dᵢ. En effet, un tel dispositif « 1 vers N » est apte à séparer les flux de données des flux destinés à la téléalimentation en fonction de leurs longueurs d'onde. Dans ces systèmes, une fibre de données FD4, FD5, FD6 arrive en entrée d'un démultiplexeur Dᵢ qui extrait la ou les longueur(s) d'onde destinée(s) à la téléalimentation d'un composant optique actif F04, F05, F06 situé à proximité.

Une fois les longueurs d'ondes extraites, celles-ci sont dirigées dans le cadre du réseau représenté de manière générale à la figure 4 vers un module de conversion d'énergie MC4. Ledit module de conversion d'énergie MC4 est connecté électriquement au composant optique actif F04 à alimenter, lui-même connecté à au moins une fibre optique FD₄ₑ assurant l'acheminement des flux de données entrant vers ledit composant optique actif F04, et au moins une fibre optique sortante FD₄ₛ assurant la répartition des flux de données sortant en fonction de leur destination dans le réseau.

Dans un premier mode de réalisation particulier représenté à la figure 5 le module de conversion d'énergie MC4 est constitué d'une pluralité de composants photovoltaïques PH5ᵢ montés en série ou en parallèle afin d'amplifier respectivement la valeur de la tension ou la valeur du courant délivré.

La figure 6A représente un deuxième mode de réalisation particulier dans lequel le dispositif de conversion d'énergie MC4 est constitué d'un unique composant optique actif PH₆₁ connecté à un circuit amplificateur CA6 passif dont le principe de fonctionnement a été décrit plus haut. La figure 6B illustre le cas du circuit amplificateur CA6 actif.

Dans une variante des modes de réalisation précédents non représentée sur les figures, les longueurs d'onde destinées à la téléalimentation sont fournies par une source optique distincte de celle destinée à l'envoi des données. Cependant, les flux lumineux issus de ces deux sources optiques distinctes transitent par les mêmes fibres optiques de données.

Dans un mode de réalisation avantageux de l'invention, l'énergie utilisée pour alimenter électriquement un composant optique permet également de le commander. Ce mode de réalisation s'applique par exemple à la télécommande/ téléalimentation d'un coupleur optique à répartition variable de puissance optique.

Un coupleur optique variable est un composant optique actif permettant de faire varier le pourcentage de lumière transmise par chacune de ses sorties respectivement de 0 à 100% et de 100 à 0%. Un tel composant permet, entre autres, d'assurer la répartition de la puissance optique en fonction de l'éloignement des utilisateurs par rapport à la source optique, de favoriser en cas de besoin une de ses sorties plutôt qu'une autre, ou encore de récupérer la puissance optique d'un utilisateur ayant de faibles pertes optiques pour approvisionner un autre utilisateur ayant des pertes optiques plus importantes.

La variation du taux de transmission des sorties du coupleur optique étant fonction de la valeur du courant appliqué à ses bornes, la valeur du courant en sortie du dispositif d'alimentation utilisé doit être variable. Par exemple si le dispositif d'alimentation utilise un module de conversion d'énergie comportant plusieurs composants photovoltaïques, en faisant varier la puissance optique envoyée par une source optique pour éclairer lesdits composants photovoltaïques, la valeur du courant électrique délivré pour alimenter le coupleur variable varie et par conséquent le coupleur optique est commandé en même temps et par la même voie que celle utilisée pour l'alimenter. Ainsi, le composant optique actif est commandé en faisant varier la puissance optique de la source optique émettrice située dans un central téléphonique distant.

L'invention s'applique également à la télécommande de composants optiques actifs indépendamment de l'alimentation desdits composants optiques passifs. La télécommande de composant optique actif ne nécessite pas l'envoi de fortes puissance optiques dans le réseau, c'est pourquoi le flux lumineux destiné à la télécommande de composants optiques actifs est transporté, de manière avantageuse, dans des fibres optiques destinées au transport des flux de données.

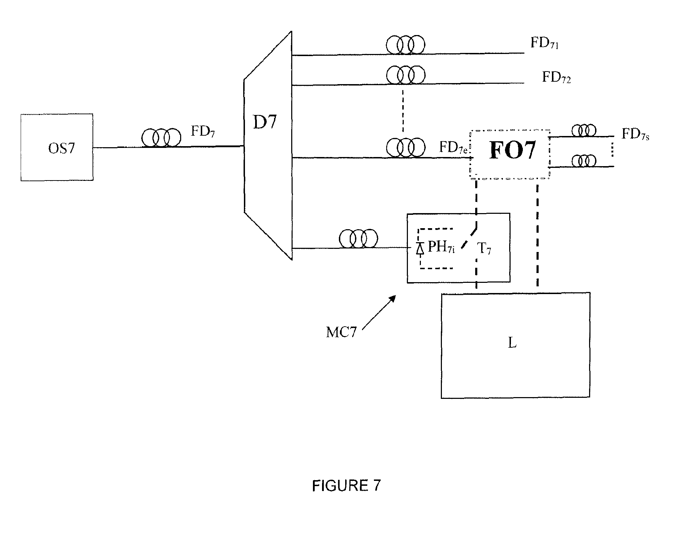

Un exemple de réseau dans lequel un composant optique actif est télécommandé selon l'invention va maintenant être décrit en référence à la figure 7.

Dans le réseau de la figure 7, la ou les longueurs d'onde dédiées à la télécommande transitent via une fibre de données FD₇ puis sont séparées des longueurs d'onde de données par un démultiplexeur D₇ disposé à proximité d'un composant optique actif F07 à commander, ledit composant optique actif F07 étant connecté à au moins une fibre optique de données FD₇ₑ assurant l'acheminement des flux de données entrant vers ledit composant optique actif F07, et au moins une fibre optique sortante FD₇ₛ assurant la répartition des flux de données sortant en fonction de leur destination dans le réseau.

Dans ce réseau, la ou les longueur(s) d'onde de télécommande sont injectée(s) dans un module de conversion d'énergie MC7. Le module de conversion d'énergie MC7 est par exemple constitué d'au moins un composant photovoltaïque PH₇ᵢ. Une alimentation électrique est assurée par une source d'énergie locale L lorsque cela est nécessaire au fonctionnement du composant optique actif F07 à télécommander. La source d'énergie locale L consiste par exemple en des piles au lithium ou encore en un panneau de cellules photovoltaïques exposé en plein air et associé à un accumulateur de charge. Enfin, le circuit d'alimentation est fermé ou ouvert à l'aide d'un interrupteur T actionné par le module de conversion d'énergie MC7.

Ainsi l'état d'éclairement du module de conversion d'énergie MC7, permet de commander le composant optique actif F07. Dans un mode de réalisation de l'invention non représenté sur les figures, l'interrupteur T est constitué par un transistor.

Dans une variante de réalisation également non représenté sur les figures, le transistor et le module de conversion d'énergie MC7 sont remplacés par un phototransistor lequel remplira à la fois la fonction de convertisseur d'énergie et la fonction d'interrupteur.

Le dispositif présenté ici présente l'avantage de ne pas utiliser un réseau de distribution d'électricité et ne dispose d'aucun élément consommateur d'énergie entre la source d'énergie locale et la fonction optique à commander.

Un exemple d'utilisation d'un dispositif de télécommande selon l'invention est la protection ou la restauration d'un chemin optique. La protection d'un réseau consiste à doubler l'artère optique principale reliant le central téléphonique avec le point de répartition (exemple). En effet, une défaillance intervenant à ce niveau prive tous les utilisateurs des données. Ce type de protection fait appel à des commutateurs « un vers deux » et « deux vers un » permettant de basculer instantanément sur le support de protection.

Afin de faire basculer la transmission d'une sortie vers l'autre, il suffit d'appliquer une tension électrique pendant un laps de temps très court, de l'ordre que quelques centaines de nanosecondes, aux bornes d'un commutateur optique. Il convient d'appliquer la même tension mais avec une polarité inversée pour faire rebasculer la transmission vers la première sortie. Une fois que la transmission a basculé, il n'est plus nécessaire d'alimenter le composant optique pour maintenir cet état, le commutateur ne devant être alimenté que lors des phases de basculement : on dit qu'il est "bistable".

Bien qu'un commutateur optique ne nécessite pas d'être alimenté en permanence, c'est un composant qui demande une puissance électrique assez importante pour pouvoir s'activer. Toutefois, comme il ne nécessite qu'une très faible énergie électrique, il peut être alimenté au moyen d'une pile lithium dont la durée de vie pourra aller jusqu'à une dizaine d'années en tenant compte de la fréquence d'utilisation des commutateurs optiques dans une liaison optique.

Dans un autre exemple de mise en oeuvre du dispositif de télécommande selon l'invention, la source optique OS7 disposée au central optique et dont la fonction est d'émettre la longueur d'onde de télécommande est un réflectomètre optique dans le domaine temporel ou OTDR (*Optical Time Domain Reflectometer.* L'utilisation d'un réflectomètre optique comme source d'émission de la longueur d'onde de télécommande présente de nombreux intérêts, notamment du point de vu économique. En effet, les réflectomètres sont des sources lumineuses déjà présentes dans le réseau où elles permettent de déterminer, par une technique dite de réflectométrie, si une fibre optique constitutive du réseau présente un défaut ou une cassure pouvant entraîner une mauvaise transmission des données. Une telle étude de l'intégrité des fibres optiques constitutives du réseau est effectuée régulièrement, par exemple toutes les trois heures et dure quelques minutes. Ainsi, un tel réflectomètre peut être utilisé à d'autres fins le reste du temps.

D'autres composants optiques bistables peuvent, également, être télécommandés au moyen d'un dispositif selon l'invention. De tels composants peuvent être, entre autres, des atténuateurs optiques variables ou VOA (*Variable Optical Attenuator*) dont la fonction est d'égaliser la puissance optique associée à chaque signal optique de données émis par équipement terminal du réseau, tels des équipements utilisateurs à destination du central optique. En effet, en fonction de l'éloignement au central optique des différents équipements utilisateurs, la puissance optique associée à chacun des signaux optiques de données varie ce qui entraîne une perturbation de la réception de ces signaux par le central optique.

En appliquant une puissance électrique à un VOA durant un court laps de temps, il est possible de faire varier son niveau d'atténuation. Cette variation du niveau d'atténuation est proportionnelle à la puissance électrique appliquée au VOA.

Bien que des modes de réalisation particuliers de la présente invention aient été décrits ci-dessus, l'homme du métier comprendra que diverses modifications et aménagements peuvent se pratiquer sans sortir du cadre de la présente invention.

## Revendications

1. Dispositif de télécommande d'au moins un composant optique actif (FOi) **caractérisé en ce qu'il comporte :**
- des moyens de connexion à une extrémité d'une fibre optique (FDᵢ, FTaᵢ) destinée à transporter une énergie lumineuse,
- au moins un module de conversion d'énergie (MC7) passif assurant la conversion de ladite énergie lumineuse en une énergie électrique destinée à commander ledit composant optique actif (FOi).

2. Dispositif de télécommande selon la revendication 1, **caractérisé en ce qu'**il comporte des moyens d'alimentation électrique locale (L) connectés au composant optique actif (FOi).

3. Dispositif de télécommande selon la revendication 2, **caractérisé en ce qu'**il comporte un dispositif interrupteur (T) reliant les moyens d'alimentation électrique locale (L) au composant optique passif (FOi), ledit dispositif interrupteur (T) étant actionné par le module de conversion (MC7).

4. Dispositif de télécommande selon la revendication 3, **caractérisé en ce que** le module de conversion d'énergie (MC7) et le dispositif interrupteur (T) sont constitués par au moins un phototransistor.

5. Réseau optique comportant au moins une source optique (OSi), au moins un composant optique actif (FOi), et au moins une fibre optique (FDᵢ, FTaᵢ) permettant de transporter une énergie lumineuse issue de la source optique (OSi) jusqu'audit composant optique actif (FOi),
**caractérisé en ce qu'**il comporte au moins un dispositif de télécommande dudit au moins un composant optique actif (FOi), ledit dispositif comportant :
- des moyens de connexion à une extrémité de ladite fibre optique (FDᵢ, FTaᵢ),
- au moins un module de conversion d'énergie (MC7) passif assurant la conversion de ladite énergie lumineuse en une énergie électrique destinée à commander ledit composant optique actif (FOi).

6. Réseau selon la revendication 5, **caractérisé en ce que** l'énergie lumineuse destinée à commander ledit composant optique actif (FOi) est transportée via une fibre optique transportant des données (FDᵢ).
